# EUROPÄISCHE PATENTSCHRIFT

(11) **EP 3 704 393 B1**
(45) Veröffentlichungstag und Bekanntmachung des Hinweises auf die Patenterteilung: **07.01.2026**
(21) Anmeldenummer: 18803533.1
(22) Anmeldetag: 29.10.2018
(51) Int. Cl.: B60K 6/387, F16D 25/08, F16D 25/10, B60K 6/40, B60K 6/405, B60K 6/547, B60K 6/48, F16D 21/06

(54) **MEHRFACHKUPPLUNGSEINRICHTUNG UND HYBRIDMODUL FÜR EIN KRAFTFAHRZEUG**
MULTI-CLUTCH DEVICE AND HYBRID MODULE FOR A MOTOR VEHICLE
SYSTÈME D'EMBRAYAGE MULTIPLE ET MODULE HYBRIDE POUR VÉHICULE AUTOMOBILE

(30) Priorität: 02.11.2017 DE 102017125623
(43) Veröffentlichungstag der Anmeldung: 09.09.2020
(73) Patentinhaber: Schaeffler Technologies AG & Co. KG, 91074 Herzogenaurach (DE)
(72) Erfinder: HOFSTETTER, Dirk, 76448 Durmersheim (DE)
(74) Vertreter: Schaeffler Technologies
(86) Internationale Anmeldenummer: PCT/DE2018/100879
(87) Internationale Veröffentlichungsnummer: WO 2019/086073

(56) Entgegenhaltungen:
- EP-A1- 2 287 487
- EP-B1- 2 287 487
- DE-A1- 102015 215 875
- FR-A1- 2 871 111
- FR-B1- 2 871 111

## Beschreibung

Die Erfindung betrifft eine Mehrfachkupplungseinrichtung für ein Hybridmodul, welches für ein Kraftfahrzeug, wie z.B. einen Pkw, einen Lkw oder ein anderes Nutzfahrzeug vorgesehen ist, und welches an eine Verbrennungskraftmaschine anzukoppeln ist. Des Weiteren betrifft die Erfindung das Hybridmodul selbst, das die Mehrfachkupplungseinrichtung aufweist.

Ein Hybridmodul umfasst üblicherweise eine Anschlusseinrichtung zur mechanischen Ankopplung einer Verbrennungskraftmaschine, eine Trennkupplung, mit der Drehmoment von der Verbrennungskraftmaschine auf das Hybridmodul übertragbar ist und mit der das Hybridmodul von der Verbrennungskraftmaschine trennbar ist, eine elektrische Maschine zur Erzeugung eines Antriebsdrehmoments mit einem Rotor, sowie einer Doppelkupplungsvorrichtung, mit der Drehmoment von der elektrischen Maschine und/ oder von der Trennkupplung auf einen Antriebsstrang übertragbar ist. Die Doppelkupplungsvorrichtung umfasst eine erste Teilkupplung und eine zweite Teilkupplung. Jeder angeordneten Kupplung ist jeweils ein Betätigungssystem zugeordnet.

Die elektrische Maschine ermöglicht das elektrische Fahren, Leistungszuwachs zum Verbrennungsmotorbetrieb und Rekuperieren. Die Trennkupplung und deren Betätigungssystem sorgen für das Ankuppeln oder Abkuppeln des Verbrennungsmotors.

Wenn ein Hybridmodul mit einer Doppelkupplung derart in einen Antriebsstrang integriert wird, dass sich das Hybridmodul in Drehmomentübertragungsrichtung zwischen Verbrennungsmotor und Getriebe befindet, müssen im Fahrzeug der Verbrennungsmotor, das Hybridmodul, die Doppelkupplung mit ihren Betätigungssystemen und das Getriebe hinter- oder nebeneinander angeordnet werden. Eine solche Anordnung führt jedoch gelegentlich zu Bauraumproblemen.

Um ein sehr kompaktes Hybridmodul mit integrierter Doppelkupplung zu realisieren, besteht ein vorteilhaftes Bauprinzip darin, die Trennkupplung und die beiden Teilkupplungen der Doppelkupplung direkt nebeneinander anzuordnen.

Aus dem Stand der Technik sind verschiedenste Ausführungsformen von Hybridmodulen bzw. deren Mehrfachkupplungseinrichtungen bekannt.

So offenbart die DE 10 2009 002 805 A1 einen Parallel-Hybridantrieb für Kraftfahrzeuge mit einem im Antriebsstrang angeordneten Fahrzeuggetriebe mit veränderlicher Übersetzung, einer mit der Getriebeeingangswelle antriebsverbundenen Elektromaschine und mit einem über eine Kupplungsanordnung mit der Getriebeeingangswelle kuppelbaren bzw. von dieser abkuppelbaren Verbrennungsmotor. Die Kupplungsanordnung umfasst weiterhin eine im Zugbetrieb des Verbrennungsmotors einkuppelnde Freilaufkupplung und eine dazu parallele schaltbare Reibungskupplung.

Die WO2008/052909 A1 offenbart einen Antriebsstrang für ein Hybridfahrzeug zur mechanischen Kopplung eines Verbrennungsmotors mit einer elektrischen Maschine mittels einer Kupplung. Die Kupplung kann eine Klauenkupplung umfassen, sowie ein Anfahrelement, das mit der elektrischen Maschine verbunden ist und wählbare Anteile der Antriebsleistung aus der elektrischen Maschine auskoppelt. Das Anfahrelement kann ein Wandler, eine Proportionalkupplung und/oder eine Doppelkupplung umfassen.

Aus der WO 2017/129165 A1 ist eine Kupplungsanordnung für einen Antriebsstrang eines Kraftfahrzeuges mit Hybridantrieb bekannt, wobei diese Kupplungsanordnung eine erste Kupplung und eine zweite Kupplung aufweist, die jeweils rotatorisch voneinander entkoppelbare Drehteile aufweisen, wobei ein erstes Drehteil der ersten Kupplung mit einem ersten Drehteil der zweiten Kupplung drehfest verbunden ist. Es ist hier als vorteilhafte Ausführungsform angegeben, dass die zweite Kupplung als Doppelkupplung, vorzugsweise als nasse bzw. nasslaufende Doppelkupplung ausgebildet ist.

Die nicht vorveröffentlichte internationale Anmeldung mit dem Aktenzeichen PCT/DE2017/100577 lehrt eine Kupplungsanordnung für einen Antriebsstrang eines Kraftfahrzeuges mit einer Elektromaschine und einer Verbrennungskraftmaschine, deren Drehmoment zu einem Getriebe durch ein Kupplungsaggregat leitbar ist, wobei eine Trennkupplung zwischen einem Koppelorgan, das zum Einleiten von Drehmoment der Elektromaschine in Richtung des Kupplungsaggregates vorbereitet ist, und einem verbrennungskraftmaschinen-seitig antreibbaren Übertragungsorgan angeordnet ist. Ein als Kette ausgebildetes Endloszugmittel ist zur Übertragung eines Drehmoments von der Elektromaschine zum Koppelorgan eingesetzt.

Sämtliche der dargestellten Hybridmodule bzw. Kupplungseinrichtungen sind einem betriebsbedingten Verschleiß unterworfen und benötigen einen bestimmten Bauraum.

FR 2 871 111 A1 offenbart ebenfalls eine Mehrfachkupplungseinrichtung für ein Hybridmodul zum Ankoppeln einer Verbrennungskraftmaschine.

Der vorliegenden Erfindung liegt die Aufgabe zugrunde, eine Mehrfachkupplungseinrichtung sowie ein mit der Mehrfachkupplungseinrichtung ausgestattetes Hybridmodul für ein Kraftfahrzeug zur Verfügung zu stellen, die mit flexibel ausgestaltbarem Bauraum eine lange Lebensdauer aufweisen.

Diese Aufgabe wird durch die erfindungsgemäße Mehrfachkupplungseinrichtung nach Anspruch 1 sowie durch das erfindungsgemäße Hybridmodul nach Anspruch 9 gelöst. Vorteilhafte Ausführungsformen der Mehrfachkupplungseinrichtung sind in den Unteransprüchen 2 bis 8 angegeben.

Eine vorteilhafte Ausgestaltung des Hybridmoduls ist in Unteranspruch 10 angegeben. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Begriffe radial und axial beziehen sich im Rahmen der vorliegenden Erfindung immer auf die Rotationsachse der Mehrfachkupplungseinrichtung bzw. des Hybridmoduls.

Die Erfindung betrifft eine Mehrfachkupplungseinrichtung für ein Hybridmodul zum Ankoppeln einer Verbrennungskraftmaschine, die eine Trennkupplung, mit der Drehmoment von der Verbrennungskraftmaschine auf die Mehrfachkupplungseinrichtung übertragbar ist und mit der die Mehrfachkupplungseinrichtung von der Verbrennungskraftmaschine trennbar ist, sowie eine Doppelkupplungsvorrichtung, mit der Drehmoment von einer elektrischen Maschine und/ oder von der Trennkupplung auf einen Antriebsstrang übertragbar ist, umfasst. Die Doppelkupplungsvorrichtung weist eine erste Teilkupplung und eine zweite Teilkupplung auf; sowie ein Getriebeelement zur Ausbildung eines Getriebes zwischen der elektrischen Maschine und der Mehrfachkupplungseinrichtung zwecks Übertragung einer Drehbewegung zwischen der elektrischen Maschine und der Mehrfachkupplungseinrichtung. Die einzelnen Kupplungen und das Getriebeelement sind in einem Nassraum angeordnet. Es ist erfindungsgemäß vorgesehen, dass die Trennkupplung als normal geschlossene Kupplung ausgeführt ist.

Das bedeutet, dass die Trennkupplung eine Kupplungseinrichtung ist, die im normalen, unbetätigten Zustand geschlossen ist und ein Drehmoment übertragen kann, und zwecks Öffnung mit einer Betätigungskraft zu betätigen ist.

Alle drei Teilkupplungen der Mehrfachkupplungseinrichtung sind dabei als Nasskupplungen ausgeführt.

Diese Bauweise ermöglicht den Einsatz von verschleißgeminderten Nasskupplungen, ohne auf eine Kombination mit dem Betrieb eines Elektromotors zur Ausbildung eines Hybridmoduls verzichten zu müssen.

Gleichzeitig ermöglicht die erfindungsgemäße Mehrfachkupplungseinrichtung einen Notbetrieb bei einem Ausfall bis von zu zwei Kupplungsaktoren, da auch noch in einem solchen Zustand das Fahrzeug mit dem Betrieb des Verbrennungsmotors eine Werkstatt erreichen kann. Zudem wird durch diese Anordnung die Lagerbelastung am Rotationslager sowie auch am Betätigungslager verringert, da lediglich zum temporären Öffnen der Trennkupplung entsprechende Kräfte einzuleiten sind.

Es ist bevorzugt vorgesehen, dass die Kupplungen sowie das Getriebeelement um eine gemeinsame Rotationsachse koaxial angeordnet sind. Damit lässt sich eine axial sehr kompakte Mehrfachkupplungseinrichtung bzw. ein axial sehr kompaktes Hybridmodul zur Verfügung stellen.

Bevorzugt ist das Getriebeelement zur achsparallelen Anbindung einer elektrischen Maschine ausgestaltet, wobei in diesem Fall die angeschlossene E- Maschine nicht koaxial angeordnet ist.

Die Mehrfachkupplungseinrichtung kann derart ausgestaltet sein, dass die Trennkupplung sowie die beiden Teilkupplungen einander radial überlagernd angeordnet sind. Das heißt, dass die Trennkupplung sowie die beiden Teilkupplungen radial ineinander verschachtelt angeordnet sind, wobei sie entlang der gemeinsamen Rotationsachse im Wesentlichen die gleiche Axialposition aufweisen, jedoch radial unterschiedliche Positionen bzw. Erstreckungsmaße aufweisen.

Dabei kann die Trennkupplung in Bezug zu den beiden Teilkupplungen radial innen angeordnet sein. Das bedeutet, dass die beiden Teilkupplungen in Bezug zur Trennkupplung weiter außen und demzufolge an deren radialer Außenseite angeordnet sind, wobei eine der beiden Teilkupplungen die jeweils andere Teilkupplung radial außen überlagert.

Das Trennkupplungsbetätigungssystem kann eine im Wesentlichen ringförmige Kolben-Zylinder-Einheit aufweisen, deren Kolben im Wesentlichen axial translatorisch verschiebbar ist, und weiterhin ein ringförmiges Betätigungslager aufweisen, welches eine rotatorische Relativbewegung zwischen der Kolben-Zylinder-Einheit und einem zu betätigenden Kupplungselement der Trennkupplung erlaubt. Es ist weiterhin insbesondere vorgesehen, dass die Trennkupplung und die Teilkupplungen mittels eines gemeinsamen Rotationsteils mechanisch miteinander verbunden sind, und dass der Trennkupplung eine Federeinrichtung zugeordnet ist, die sich entlang der axialen Richtung an dem gemeinsamen Rotationsteil abstützt und zumindest bei Betätigung der Trennkupplung zwecks deren Öffnung eine entlang der axialen Richtung wirkende Kraft auf ein Kraftübertragungselement, insbesondere einen Zuganker aufbringt. Das Kraftübertragungselement stützt sich wiederum an einem Lamellenpaket der Trennkupplung ab, so dass die Lamellen aneinander gedrückt werden und derart die Federkraft der Federeinrichtung die Betätigung der Trennkupplung in die geschlossene Stellung bewirkt.

Das Kraftübertragungselement ist somit ebenfalls Bestandteil der erfindungsgemäßen Mehrfachkupplungseinrichtung.

Vorzugsweise ist eine Tellerfeder als Federeinrichtung vorgesehen, die mit einem Zuganker zusammen wirkt und sich am ausgangsseitigen Lamellenkorb der Trennkupplung abstützt, sodass die Tellerfeder über den Zuganker ständig eine Kraft auf eine Seite der Trennkupplung aufbringt und diese damit schließt.

Weiterhin kann die Mehrfachkupplungseinrichtung ein Trennkupplungsbetätigungssystem zur Betätigung der Trennkupplung aufweisen, wobei das Trennkupplungsbetätigungssystem mechanisch mit dem Kraftübertragungselement verbunden ist, so dass das Kraftübertragungselement entgegen der Wirkrichtung der von der Federeinrichtung aufgebrachten Kraft verschiebbar ist und derart die Trennkupplung geöffnet werden kann. Eine geschickte Auslegung der Kennlinie der Federeinrichtung kann dazu führen, dass auch bei vollständig geöffneter Trennkupplung nur eine relativ geringe Betätigungskraft von dem Trennkupplungsbetätigungssystem aufgebracht werden muss und entsprechend ein zwischen dem Trennkupplungsbetätigungssystem und dem Kraftübertragungselement angeordnetes Ausrücklager der Trennkupplung entsprechend gering belastet wird.

Zum Beispiel kann die Federkennlinie der Federeinrichtung zumindest abschnittsweise den Verlauf einer nach unten geöffneten Parabel aufweisen.

Damit ist die Federkennlinie der Federeinrichtung in einem Kraft-Weg-Diagramm gemeint, so dass zur Realisierung eines anfänglichen Federwegs zunehmend Kraft erforderlich ist, um die Trennkupplung zu öffnen, gegen Ende des Betätigungsweges jedoch wieder weniger Kraft erforderlich ist, so dass die Offen-Haltung der geöffneten Trennkupplung mit relativ geringer Kraft möglich ist.

Das Kraftübertragungselement kann mechanisch an einen Druckring angeschlossen sein, der die von der Federeinrichtung erzeugte und vom Kraftübertragungselement übertragene Kraft im Wesentlichen achsparallel auf die Eingangsseite des Lamellenpakets der Trennkupplung richtet.

In einer weiteren vorteilhaften Ausgestaltung der Mehrfachkupplungseinrichtung ist vorgesehen, dass die Mehrfachkupplungseinrichtung ein erstes Betätigungssystem zur Betätigung der ersten Teilkupplung und ein zweites Betätigungssystem zur Betätigung der zweiten Teilkupplung aufweist, wobei das erste Betätigungssystem und das zweite Betätigungssystem einander radial zumindest abschnittsweise überlagern. Das heißt, dass hier für die Doppelkupplungsvorrichtung ein radial geschachtelter Doppel-Zentraleinrücker oder -ausrücker zur Anwendung kommen kann.

Dabei kann vorgesehen sein, dass beide Betätigungssysteme jeweils eine im Wesentlichen ringförmige Kolben-Zylinder-Einheit aufweisen, deren Kolben im Wesentlichen axial translatorisch verschiebbar ist, und weiterhin jeweils ein ringförmiges Betätigungslager aufweisen, welches eine rotatorische Relativbewegung zwischen der Kolben-Zylinder-Einheit und einem zu betätigenden Kupplungselement der jeweiligen Teilkupplung erlaubt, wobei die radiale Erstreckung einer jeweiligen Kolben-Zylinder-Einheit in Bezug zur Rotationsachse größer ist als der Abstand einer Umlaufbahn eines jeweiligen Betätigungslagers zur Rotationsachse. In alternativer Ausgestaltung ist vorgesehen, dass die radialen Erstreckungen der jeweiligen Kolben-Zylinder-Einheiten und der Umlaufbahnen gleich sind.

Das Getriebeelement kann ein Kettenrad zur Ausbildung eines Kettentriebes; ein Riemenrad zur Ausbildung eines Riementriebes; oder ein Zahnrad zur Ausbildung eines Zahnradgetriebes sein. In der Ausgestaltung als Riemenrad bietet es sich an, den Riementrieb als Zahnriementrieb oder Keilriementrieb auszubilden.

Ein realisiertes Zahnradgetriebe kann einstufig oder mehrstufig ausgeführt sein.

Zur Lösung der Aufgabe wird weiterhin ein Hybridmodul zur Verfügung gestellt, welches eine erfindungsgemäße Mehrfachkupplungseinrichtung sowie eine elektrische Maschine zur Erzeugung eines Antriebsdrehmoments mit einem Rotor umfasst, wobei der Rotor in Bezug zur Rotationsachse der Mehrfachkupplungseinrichtung achsparallel angeordnet ist und mittels eines Getriebes, welches das Getriebeelement der Mehrfachkupplungseinrichtung umfasst, mit der Mehrfachkupplungseinrichtung verbunden ist. Mit dem Getriebe kann somit ein Drehmoment bzw. eine Drehbewegung von der elektrischen Maschine auf die Mehrfachkupplungseinrichtung zum Antrieb der Mehrfachkupplungseinrichtung und demzufolge eines Antriebsmoduls, bzw. in umgekehrter Richtung von der Mehrfachkupplungseinrichtung auf die elektrische Maschine zwecks Rekuperation erfolgen. Das Hybridmodul kann dabei derart ausgestaltet sein, dass der Rotor der elektrischen Maschine außerhalb des Nassraums angeordnet ist.

Ergänzend wird eine Antriebsanordnung für ein Kraftfahrzeug mit einer Verbrennungskraftmaschine und einem erfindungsgemäßen Hybridmodul sowie mit einem Fahrzeuggetriebe zur Verfügung gestellt, wobei das Hybridmodul mit der Verbrennungskraftmaschine und dem Fahrzeuggetriebe mechanisch über Kupplungen des Hybridmoduls verbunden ist.

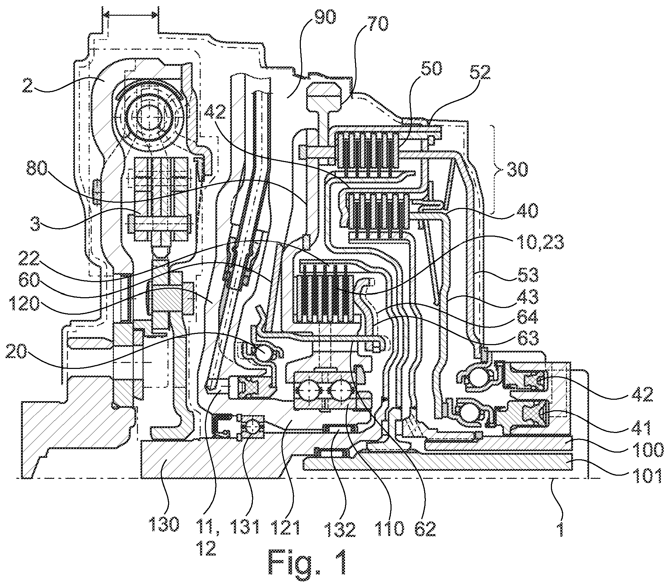

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
Figur 1: eine erfindungsgemäße Mehrfachkupplungseinrichtung in einem Teilschnitt, und
Figur 2: eine vergrößerte Ansicht eines Ausschnitts aus der in Figur 1 dargestellten erfindungsgemäßen Mehrfachkupplungseinrichtung.

Ersichtlich ist, dass auf einer gemeinsamen Rotationsachse 1 eine Trennkupplung 10 sowie eine Doppelkupplungsvorrichtung 30 angeordnet sind. Die Doppelkupplungsvorrichtung 30 umfasst eine erste Teilkupplung 40 und eine zweite Teilkupplung 50. Alle drei Kupplungen 10,40,50 sind in einem Nassraum 90 angeordnet. Das bedeutet, dass alle drei Kupplungen 10,40,50 alle als Nasskupplungen ausgeführt sind. Des Weiteren sind alle drei Kupplungen 10,40,50 über ein gemeinsames Rotationsteil 80 rotatorisch miteinander gekoppelt. An dem gemeinsamen Rotationsteil 80 ist ein Getriebeelement 70 fest angeordnet, welches in der hier dargestellten Ausführungsform ein Kettenrad zur Ausbildung eines Kettentriebes ist. Dieser Kettentrieb ist mit einem Ritzel einer hier nicht dargestellten elektrischen Maschine verbunden, die außerhalb des Nassraums 90 angeordnet ist. Derart lässt sich von der elektrischen Maschine auf das gemeinsame Rotationsteil 80 und demzufolge auf alle drei Kupplungen 10,40, 50 Drehmoment übertragen, und in umgekehrter Richtung. Der Trennkupplung 10 ist ein Trennkupplungsbetätigungssystem 11 zugeordnet, welches eine ringförmige Kolben-Zylinder-Einheit 12 sowie ein Betätigungslager 20 umfasst.

Die radiale Erstreckung der Kolben-Zylinder-Einheit 12 ist dabei ersichtlich kleiner als der radiale Abstand Betätigungslagers 20 zur Rotationsachse 1. Dies ermöglicht die dargestellte radiale Verschachtelung der Kolben-Zylinder-Einheit 12 und des Betätigungslagers 20.

Ein der ersten Teilkupplung 40 zugeordnetes erstes Betätigungssystem 41 und der zweiten Teilkupplung 50 zugeordnetes zweites Betätigungssystem 51 sind radial ineinander verschachtelt angeordnet.

Durch die dargestellten Maßnahmen ist eine axial sehr kompakt bauende Kupplungseinrichtung realisierbar.

Von einer Antriebswelle bzw. Kupplungseingangswelle 130, die mit einem hier nicht dargestellten Verbrennungsaggregat koppelbar ist und auf der im Antriebsstrang ein Fliehkraftpendel 2 und ein Zweimassenschwungrad 3 sitzen, die mit der Kupplungseingangswelle 130 mechanisch gekoppelt sind, kann Drehmoment in die Trennkupplung 10 über deren Trennkupplung-Lamellenträger 22 eingeleitet werden. Bei Schließung der Trennkupplung 10 mittels Betätigung des Trennkupplungsbetätigungssystems 11 wird von der Trennkupplung 10 Drehmoment auf das gemeinsame Rotationsteil 80 übertragen. Je nach Schließung einer der mit dem gemeinsamen Rotationsteil 80 verbundenen Teilkupplung 40,50 wird von dieser Teilkupplung 40,50 Drehmoment über einen jeweiligen ersten Lamellenträger 42 bzw. zweiten Lamellenträger 52 auf eine erste Getriebeeingangswelle 100 bzw. auf eine zweite Getriebeeingangswelle 101 übertragen. Zu diesem Zweck wird mittels des ersten Betätigungssystems 41 ein erster Drucktopf 43 bzw. mittels eines zweiten Betätigungssystems 51 ein zweiter Drucktopf 53 zur Schließung der jeweiligen Teilkupplung 40,50 axial verschoben.

Das gemeinsame Rotationsteil 80 ist mit einem Rotationslager 110 rotatorisch an einem Kupplungsdeckel 120 bzw. dessen axialer Auskragung 121 gelagert. Ebenfalls an dem Kupplungsdeckel 120 bzw. dessen Auskragung 121 rotatorisch gelagert ist die Kupplungseingangswelle 130, und zwar mittels eines als Wälzlager ausgeführten Festlagers 131 sowie mittels eines als Nadellager ausgeführten Loslagers 132.

Die erfindungsgemäße Mehrfachkupplungseinrichtung umfasst eine Federeinrichtung 60, die vorzugsweise, wie in den Figuren dargestellt, eine koaxial angeordnete Tellerfeder ist. Mit der Federeinrichtung 60 mechanisch gekoppelt ist ein Kraftübertragungselement 62, hier als Zuganker dargestellt. Dieses Kraftübertragungselement 62 wiederum wirkt auf einem Druckring 63, der an dem Lamellenpaket 23 der Trennkupplung 10 anliegt. Die Federeinrichtung 60 bewirkt eine entlang der axialen Richtung wirkende Kraft 61 auf das Kraftübertragungselement 62 und somit auf den Druckring 63, der diese Kraft 61 auf das Lamellenpaket 23 der Trennkupplung 11 überträgt. Somit wird durch die Federeinrichtung 60 eine ständig wirkende Kraft 61 auf die Trennkupplung 10 ausgeübt, sodass diese im unbetätigten Zustand geschlossen ist und somit eine "normal geschlossene" Kupplung darstellt. Das Betätigungslager 20 des Trennkupplungsbetätigungssystems 11 wirkt auf das Kraftübertragungselement 62, sodass bei Betätigung des Trennkupplungsbetätigungssystems 11 von diesem eine Betätigungskraft über das Betätigungslager 20 in das Kraftübertragungselement 62 eingeleitet wird und derart die Trennkupplung 10 in einen geöffneten Zustand überführt wird. Es ist ersichtlich, dass eine Kraft zum Öffnen der Trennkupplung 10 nur aufzubringen ist, wenn die Trennkupplung 10 geöffnet wird, nämlich bei einem Schaltprozess. Demzufolge treten in nur relativ seltenen Fällen Belastungen des Rotationslagers 110 sowie des Betätigungslagers 20 auf. Durch eine Auswahl der Federeinrichtung 60 mit einer geeigneten Kennlinie, die zum Beispiel abschnittsweise der Form einer unten offenen Parabel entsprechen kann, ist es weiterhin möglich, die Betätigungskräfte bzw. die auf die Lager wirkenden axialen Kräfte zu verringern, insbesondere im vollständig geöffneten Zustand der Trennkupplung 10.

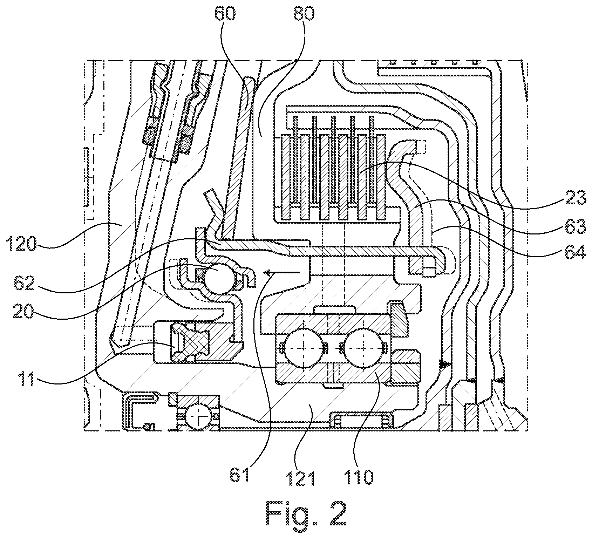

Der geöffnete Zustand der Trennkupplung 10 ist insbesondere aus Figur 2 ersichtlich. Dort ist mit gestrichelter Linie die geöffnete Stellung 64 der Trennkupplung 10 angedeutet, wenn aufgrund der Betätigung des Trennkupplungsbetätigungssystems 11 dieses eine axiale Bewegung bewirkt hat und dadurch das Betätigungslager 20 axial verlagert hat, sodass dieses entgegen der Wirkung der Kraft der Federeinrichtung 60 das Kraftübertragungselement 62 und demzufolge auch den Druckring 63 axial verlagert hat.

Die hier vorgeschlagene Mehrfachkupplungseinrichtung kombiniert aufgrund der Anordnung der Kupplungen im Nassraum eine hohe Lebenserwartung mit einem axial sehr gering bemessenen und flexibel arrangierbaren Bauraum.

### Bezugszeichenliste

- 1: Rotationsachse
- 2: Fliehkraftpendel
- 3: Zweimassenschwungrad
- 10: Trennkupplung
- 11: Trennkupplungsbetätigungssystem
- 12: Kolben-Zylinder-Einheit
- 20: Betätigungslager
- 22: Trennkupplung-Lamellenträger
- 23: Lamellenpaket der Trennkupplung
- 30: Doppelkupplungsvorrichtung
- 40: erste Teilkupplung
- 41: erstes Betätigungssystem
- 42: erster Lamellenträger
- 43: erster Drucktopf
- 50: zweite Teilkupplung
- 51: zweites Betätigungssystem
- 52: zweiter Lamellenträger
- 53: zweiter Drucktopf
- 60: Federeinrichtung
- 61: entlang der axialen Richtung wirkende Kraft
- 62: Kraftübertragungselement
- 63: Druckring
- 64: geöffnete Stellung
- 70: Getriebeelement
- 80: gemeinsames Rotationsteil
- 90: Nassraum
- 100: erste Getriebeeingangswelle
- 101: zweite Getriebeeingangswelle
- 110: Rotationslager
- 120: Kupplungsdeckel
- 121: Auskragung
- 130: Kupplungseingangswelle
- 131: Festlager der Kupplungseingangswelle
- 132: Loslager der Kupplungseingangswelle

## Patentansprüche

1. Mehrfachkupplungseinrichtung für ein Hybridmodul zum Ankoppeln einer Verbrennungskraftmaschine, wobei die Mehrfachkupplungseinrichtung aufweist:
eine Trennkupplung (10), mit der Drehmoment von der Verbrennungskraftmaschine auf die Mehrfachkupplungseinrichtung übertragbar ist und mit der die Mehrfachkupplungseinrichtung von der Verbrennungskraftmaschine trennbar ist;
eine Doppelkupplungsvorrichtung (30), mit der Drehmoment von einer elektrischen Maschine und/ oder von der Trennkupplung (10) auf einen Antriebsstrang übertragbar ist, mit einer ersten Teilkupplung (40) und einer zweiten Teilkupplung (50); und
ein Getriebeelement (70) zur Ausbildung eines Getriebes zwischen der elektrischen Maschine und der Mehrfachkupplungseinrichtung zwecks Übertragung einer Drehbewegung zwischen der elektrischen Maschine und der Mehrfachkupplungseinrichtung, wobei
die einzelnen Kupplungen und das Getriebeelement (70) in einem Nassraum (90) angeordnet sind, und
die Trennkupplung (10) als normal geschlossene Kupplung ausgeführt ist.

2. Mehrfachkupplungseinrichtung nach Anspruch 1, **dadurch gekennzeichnet, dass** das Getriebeelement (70) zur achsparallelen Anbindung einer elektrischen Maschine ausgestaltet ist.

3. Mehrfachkupplungseinrichtung nach einem der vorhergehenden Ansprüche, **dadurch gekennzeichnet, dass** die Trennkupplung (10) sowie die beiden Teilkupplungen (40,50) einander radial überlagernd angeordnet sind.

4. Mehrfachkupplungseinrichtung nach Anspruch 3, **dadurch gekennzeichnet, dass** die Trennkupplung (10) in Bezug zu den beiden Teilkupplungen (40,50) radial innen angeordnet ist.

5. Mehrfachkupplungseinrichtung nach einem der vorhergehenden Ansprüche, **dadurch gekennzeichnet, dass**
die Trennkupplung (10) und die Teilkupplungen (40, 50) mittels eines gemeinsamen Rotationsteils (80) mechanisch miteinander verbunden sind, und
der Trennkupplung (10) eine Federeinrichtung (60) zugeordnet ist, die sich entlang der axialen Richtung an dem gemeinsamen Rotationsteil (80) abstützt und zumindest bei Betätigung der Trennkupplung (10) zwecks deren Öffnung eine entlang der axialen Richtung wirkende Kraft (61) derart auf ein sich an einem Lamellenpaket (23) der Trennkupplung abstützendes Kraftübertragungselement (62), insbesondere einen Zuganker, aufbringt, dass die Lamellen aneinander gedrückt werden und die Federkraft der Federeinrichtung (60) die Betätigung der Trennkupplung (10) in die geschlossene Stellung bewirkt.

6. Mehrfachkupplungseinrichtung nach Anspruch 5, **dadurch gekennzeichnet, dass**
die Mehrfachkupplungseinrichtung ein Trennkupplungsbetätigungssystem (11) zur Betätigung der Trennkupplung (10) aufweist, wobei
das Trennkupplungsbetätigungssystem (11) derart mechanisch mit dem Kraftübertragungselement (62) verbunden ist, dass das Kraftübertragungselement (62) entgegen der Wirkrichtung der von der Federeinrichtung (60) aufgebrachten Kraft (61) verschiebbar ist und dadurch die Trennkupplung (10) öffenbar ist.

7. Mehrfachkupplungseinrichtung nach Anspruch 6, **dadurch gekennzeichnet, dass** die Federkennlinie der Federeinrichtung (60) zumindest abschnittsweise den Verlauf einer nach unten geöffneten Parabel aufweist.

8. Mehrfachkupplungseinrichtung nach einem der Ansprüche 5 bis 7, **dadurch gekennzeichnet, dass** das Kraftübertragungselement (62) mechanisch an einen Druckring (63) angeschlossen ist, der die von der Federeinrichtung (60) erzeugte und von dem Kraftübertragungselement (62) übertragene Kraft im wesentlichen achsparallel auf die Eingangsseite des Lamellenpakets (23) der Trennkupplung (10) richtet.

9. Hybridmodul, das aufweist:
eine Mehrfachkupplungseinrichtung nach einem der Ansprüche 1 bis 8, und
eine elektrische Maschine zur Erzeugung eines Antriebsdrehmoments mit einem Rotor, wobei
der Rotor in Bezug zu einer Rotationsachse der Mehrfachkupplungseinrichtung achsparallel angeordnet ist und mittels eines das Getriebeelement (70) der Mehrfachkupplungseinrichtung aufweisenden Getriebes mit der Mehrfachkupplungseinrichtung verbunden ist.

10. Hybridmodul nach Anspruch 9, **dadurch gekennzeichnet, dass** der Rotor der elektrischen Maschine außerhalb des Nassraums (90) angeordnet ist.

## Claims

1. A multi-clutch device for a hybrid module for coupling an internal combustion engine, wherein the multi-clutch device has:
a disconnect clutch (10), with which a torque can be transmitted from the internal combustion engine to the multi-clutch device and with which the multi-clutch device can be disconnected from the internal combustion engine;
a dual-clutch device (30), with which the torque can be transmitted from an electrical machine and/or from the disconnect clutch (10) to a drive train, having a first partial clutch (40) and a second partial clutch (50); and
a transmission element (70) for forming a transmission between the electrical machine and the multi-clutch device to transmit a rotational movement between the electrical machine and the multi-clutch device, wherein
the individual clutches and the transmission element (70) are arranged in a wet space (90), and
the disconnect clutch (10) is designed as a normally closed clutch.

2. The multi-clutch device according to claim 1, **characterised in that** the transmission element (70) is designed for the axially parallel connection of an electrical machine.

3. The multi-clutch device according to any one of the preceding claims, **characterised in that** the disconnect clutch (10) and the two partial clutches (40, 50) are arranged radially superimposed on one another.

4. The multi-clutch device according to claim 3, **characterised in that** the disconnect clutch (10) is arranged radially inward with respect to the two partial clutches (40, 50).

5. The multi-clutch device according to any one of the preceding claims, **characterised in that**
the disconnect clutch (10) and the partial clutches (40, 50) are mechanically connected to one another by means of a common rotating part (80), and
the disconnect clutch (10) is assigned a spring device (60) supported along the axial direction on the common rotating part (80) and, at least when the disconnect clutch (10) is actuated for the purpose of opening it, applies a force (61) acting along the axial direction to a force transmission element (62), in particular a tie rod, which is supported on a disc pack (23) of the disconnect clutch, in such a way that the discs are pressed against one another and the spring force of the spring device (60) causes the disconnect clutch (10) to be actuated into the closed position.

6. The multi-clutch device according to claim 5, **characterised in that**
the multi-clutch device has a disconnect clutch actuation system (11) for actuating the disconnect clutch (10), wherein
the disconnect clutch actuation system (11) is mechanically connected to the force transmission element (62) in such a way that the force transmission element (62) can be displaced counter to the direction of action of the force (61) applied by the spring device (60) and the disconnect clutch (10) can thereby be opened.

7. The multi-clutch device according to claim 6, **characterised in that** the spring characteristic curve of the spring device (60) has, at least in sections, the course of a downwardly open parabola.

8. The multi-clutch device according to any one of claims 5 to 7, **characterised in that** the force transmission element (62) is mechanically connected to a pressure ring (63) that directs the force generated by the spring device (60) and transmitted by the force transmission element (62) essentially axially parallel to the input side of the disc pack (23) of the disconnect clutch (10).

9. A hybrid module having:
a multi-clutch device according to any one of claims 1 to 8, and
an electrical machine for generating a drive torque with a rotor, wherein
the rotor is arranged axially parallel with respect to a rotational axis of the multi-clutch device and is connected to the multi-clutch device by means of a transmission having the transmission element (70) of the multi-clutch device.

10. The hybrid module according to claim 9, **characterised in that** the rotor of the electrical machine is arranged outside of the wet space (90).

## Revendications

1. Système d'embrayage multiple pour un module hybride permettant d'accoupler un moteur à combustion interne, le système d'embrayage multiple présentant :
un embrayage de coupure (10) au moyen duquel un couple peut être transmis du moteur à combustion interne au système d'embrayage multiple, et au moyen duquel le système d'embrayage multiple peut être séparé du moteur à combustion interne ;
un dispositif à double embrayage (30) avec lequel le couple peut être transmis d'un moteur électrique et/ou de l'embrayage de coupure (10) à une chaîne cinématique, comportant un premier embrayage partiel (40) et un second embrayage partiel (50) ; et
un élément de boîte de vitesse (70) permettant de former une boîte de vitesse entre le moteur électrique et le système d'embrayage multiple dans le but de transmettre un mouvement rotatif entre le moteur électrique et le système d'embrayage multiple, dans lequel
les embrayages individuels et l'élément de boîte de vitesse (70) sont agencés dans un espace humide (90), et
l'embrayage de coupure (10) est conçu comme un embrayage normalement fermé.

2. Système d'embrayage multiple selon la revendication 1, **caractérisé en ce que** l'élément de boîte de vitesse (70) est destiné à la liaison parallèle à l'axe d'un moteur électrique.

3. Système d'embrayage multiple selon l'une des revendications précédentes, **caractérisé en ce que** l'embrayage de coupure (10) et les deux embrayages partiels (40, 50) sont agencés superposés radialement les uns sur les autres.

4. Système d'embrayage multiple selon la revendication 3, **caractérisé en ce que** l'embrayage de coupure (10) est agencé radialement vers l'intérieur par rapport aux deux embrayages partiels (40, 50).

5. Système d'embrayage multiple selon l'une des revendications précédentes, **caractérisé en ce que**
l'embrayage de coupure (10) et les embrayages partiels (40, 50) sont reliés mécaniquement les uns aux autres au moyen d'une pièce rotative commune (80), et
l'embrayage de coupure (10) est doté d'un dispositif à ressort (60) qui s'appuie le long du sens axial sur la partie rotative commune (80) et qui, au moins lorsque l'embrayage de coupure (10) est actionné pour l'ouvrir, applique une force (61) agissant le long du sens axial sur un élément de transmission de force (62), notamment une tige de traction, qui s'appuie sur un jeu de disques (23) de l'embrayage de coupure, de telle sorte que les disques sont pressés l'un contre l'autre et que la force de ressort du dispositif à ressort (60) provoque l'actionnement de l'embrayage de coupure (10) dans la position fermée.

6. Système d'embrayage multiple selon la revendication 5, **caractérisé en ce que**
le système d'embrayage multiple présente un système d'actionnement d'embrayage de coupure (11) permettant d'actionner l'embrayage de coupure (10), dans lequel
le système d'actionnement d'embrayage de coupure (11) est relié mécaniquement à l'élément de transmission de force (62) de telle sorte que l'élément de transmission de force (62) peut être déplacé dans le sens contraire de l'action de la force (61) appliquée par le dispositif à ressort (60) et que l'embrayage de coupure (10) peut ainsi être ouvert.

7. Système d'embrayage multiple selon la revendication 6, **caractérisé en ce que** la courbe caractéristique de ressort du dispositif à ressort (60) présente, au moins dans certaines sections, le tracé d'une parabole s'ouvrant vers le bas.

8. Système d'embrayage multiple selon l'une des revendications 5 à 7, **caractérisé en ce que** l'élément de transmission de force (62) est relié mécaniquement à une bague de pression (63) qui dirige la force générée par le dispositif à ressort (60) et transmise par l'élément de transmission de force (62) essentiellement parallèlement à l'axe au côté entrée du jeu de disques (23) de l'embrayage de coupure (10).

9. Module hybride, lequel présente :
un système d'embrayage multiple selon l'une des revendications 1 à 8 et
un moteur électrique permettant de générer un couple d'entraînement avec un rotor, dans lequel
le rotor est agencé parallèlement à un axe de rotation du système d'embrayage multiple et est relié au système d'embrayage multiple au moyen d'une boîte de vitesse présentant l'élément de boîte de vitesse (70) du système d'embrayage multiple.

10. Module hybride selon la revendication 9, **caractérisé en ce que** le rotor du moteur électrique est agencé à l'extérieur de l'espace humide (90).
